# EUROPÄISCHE PATENTANMELDUNG

(11) **EP 4 814 029 A1**
(43) Veröffentlichungstag der Anmeldung: **30.09.2026**
(21) Anmeldenummer: 25166006.4
(22) Anmeldetag: 25.03.2025
(51) Int. Cl.: C08G 18/42, C08G 18/72, C08G 18/73, C08G 18/78, C08G 18/79, C09J 175/06

(54) **ZWEIKOMPONENTENSYSTEM FÜR POLYURETHANKLEBSTOFFE**

(71) Anmelder: Covestro Deutschland AG, 51373 Leverkusen (DE)
(72) Erfinder: Thiebes, Christoph, 51061 Köln (DE); Fait, Thomas, 51063 Köln (DE)
(74) Vertreter: Levpat

(57) **Zusammenfassung**

Die Erfindung betrifft ein Zweikomponentensystem für Polyurethanklebstoffe umfassend ein Polyisocyanatgemisch, die Verwendung der erfindungsgemäßen Zweikomponentensysteme für Polyurethanklebstoffe, ein Verfahren zum Kleben von mindestens einem Substrat sowie das geklebte Substrat.

## Beschreibung

Die Erfindung betrifft ein Zweikomponentensystem für Polyurethanklebstoffe umfassend ein Polyisocyanatgemisch, die Verwendung der erfindungsgemäßen Zweikomponentensysteme für Polyurethanklebstoffe, ein Verfahren zum Kleben von mindestens einem Substrat sowie das geklebte Substrat.

Unter Zweikomponentensystemen für Klebstoffe versteht man Klebstoffe, bei denen die Komponenten (a) Klebstoff-Komponente und (b) Vernetzer-Komponente aufgrund ihrer Reaktivität üblicherweise in getrennten Gefäßen gelagert werden. Als Vernetzer-Komponente kommen häufig Polyisocyanate zum Einsatz.

Das aus biobasierten Rohstoffen erhältliche Pentamethylendiisocyanat (im Folgenden auch PDI genannt) ist ein mögliches monomeres Diisocyanat zur Herstellung von nachhaltigen Polyisocyanaten. WO2024/115350 A1 beschreibt ein niedrigviskoses PDI-Allophanatpolyisocyanat.

Insbesondere für Anwendungen im Klebstoffbereich, beispielsweise zur Herstellung von Mehrlagenverbundfolien, bestand ein Bedarf an Polyisocyanatgemischen, die ausreichend niedrige Viskositäten aufweisen und gleichzeitig eine hohe Verbundfestigkeit nach Sterilisation aufweisen.

Die Aufgabe der vorliegenden Erfindung bestand somit darin, nachhaltige Zweikomponentensysteme für Polyurethanklebstoffe bereitzustellen, die die Nachteile des Standes der Technik zumindest zum Teil überwinden und sich zur Herstellung von Verbundmaterialien mit einer verbesserten Sterilisationsfestigkeit (Verbundfestigkeit nach Sterilisation) eingesetzt werden können.

Unter der Sterilisationsfestigkeit wird im Rahmen dieser Erfindung die Festigkeit eines Mehrlagenfolienverbundes bestehend aus Polyesterfilm Typ Hostaphan RNK 2-CSR, 23µm / erfindungsgemäßem Klebstoff und einem Vorverbund aus Aluminiumfolie/sterilisationsfestem Klebstoff/Cast-Polypropylenfolie Actebond ASB-203 + HAT-038-S-LV (12µm Alu / 50µm cPP "Innofol"), gemessen nach 60 minütiger Sterilisation und 24 h Nachlagerung bei Normklima verstanden, bezüglich der Festigkeit der Verbindung zwischen Polyesterfilm und Vorverbund.

Diesem Bedarf Rechnung tragend ist ein Gegenstand der vorliegenden Erfindung ein Zweikomponentensystem für Polyurethanklebstoffe enthaltend eine Komponente A), umfassend mindestens ein Polyol, und eine Komponente B), umfassend ein Polyisocyanatgemisch, enthaltend mindestens ein Polyisocyanat M) der allgemeinen Formel (I) 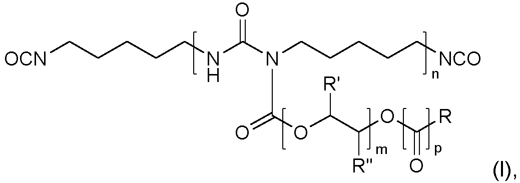 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R' und R" für Wasserstoff steht,
- n: für eine ganze Zahl von 1 bis 12,
- m: für eine ganze Zahl von 1 bis 10 und
- p: für 0 oder 1 steht

und mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen,
wobei die Komponenten A) und B) in einem Gewichtsverhältnis zueinander von 70 : 30 bis 99,9 : 0,1, bevorzugt von 80 : 20 bis 99 : 1 und besonders bevorzugt von 90 : 10 bis 97 : 3 vorliegen.

Erfindungsgemäß bedeuten die Ausdrücke "umfassend" und "enthaltend" bevorzugt "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein Polyol" bedeutet daher beispielsweise, dass nur eine Art von Polyol oder mehrere verschiedene Arten von Polyolen, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %". Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als aliphatische Kohlenwasserstoffreste, die gesättigt oder ungesättigt sind und mindestens einen aromatischen Substituenten aufweisen.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Für den Fall, dass die Gruppen oder Verbindungen als "gegebenenfalls substituiert" oder "substituiert" offenbart werden, sind geeignete Substituenten -F, -Cl, -Br, -I, -OH, -OCH₃, OCH₂CH₃, -O-Isopropyl oder -O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -CI), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Die erfindungsgemäßen Zweikomponentensysteme für Polyurethanklebstoffe enthalten eine Komponente A), umfassend mindestens ein Polyol (im Folgenden auch als Polyhydroxylverbindung A) oder Polyolkomponente A) bezeichnet).

### Komponente A)

Geeignete Polyole als Komponente A) für die erfindungsgemäßen Zweikomponentensysteme sind beispielsweise Polyesterpolyole, Polyetherpolyole, Polycarbonatpolyole, Polyestercarbonatpolyole, Polyurethanpolyole, Polyacrylatpolyole oder beliebige Gemische solcher Polyhydroxylverbindungen. Geeignete Polyolkomponenten weisen in der Regel eine mittlere OH-Funktionalität von 1,5 bis 6, bevorzugt 1,8 bis 4, besonders bevorzugt von 1,9 bis 3 auf.

Als Polyhydroxylverbindung A) geeignete Polyesterpolyole lassen sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen erhalten.

Zur Herstellung der Polyesterpolyole geeignete mehrwertige Alkohole sind insbesondere solche des Molekulargewichtsbereichs 62 bis 400 g/mol wie z. B. 1,2-Ethandiol, Diethylenglykol, Triethylenglykol, Tetraethylenglykol, 1,2- und 1,3-Propandiol, 1,12-Dodecandiol, 1,2- und 1,4-Cyclohexandiol, 1,4-Cyclohexandimethanol, 4,4'-(1-Methylethyliden)-biscyclohexanol, Tricyclodecandimethanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol, 1,3,5-Tris(2-hydroxyethyl)-isocyanurat, Xylit, Dipentaerythrit oder Sorbit aber auch Polyethylenglykole des Molekulargewichtsbereichs 100 bis 4000 g/mol.

In untergeordneten Mengen können dabei auch Monoalkohole wie z. B. 2-Ethylhexanol, n-Octanol, n-Nonanol, n-Decanol, n-Tetradecanol, n-Hexadecanol und Isostearylalkohol mitverwendet werden.

Die zur Herstellung der Polyesterpolyole A) verwendeten Säuren oder Säurederivate können aliphatischer, cycloaliphatischer, aromatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Malonsäure, Bernsteinsäure, Glutarsäure, Adipinsäure, Pimelinsäure, Suberinsäure, Azelainsäure, Sebacinsäure, Dodecandisäure, Maleinsäure, Maleinsäureanhydrid, Fumarsäure, Itaconsäure, 1,4-Cyclohexandicarbonsäure, Hexahydrophthalsäure, Tetrahydrophthalsäure, Phthalsäure, Isophthalsäure, Phthalsäureanhydrid, Trimellitsäure, Pyromellithsäure, dimere und trimere Fettsäuren, Terephthalsäuredimethylester und Terephthalsäure-bis-glykolester.

In untergeordneten Mengen können dabei auch Monocarbonsäuren wie z. B. Capronsäure, Caprylsäure, Caprinsäure, Laurinsäure, Myristinsäure, Palmitinsäure, Stearinsäure, Arachinsäure, Behensäure, dehydrierte Rizinusölfettsäure, Sonnenblumenfettsäure, Linolensäure und/oder Linolensäure, Tallölfettsäure, Benzoesäure und Zimtsäure mitverwendet werden.

Hydoxycarbonsäuren, wie z. B. Glykolsäure, Milchsäure, Mandelsäure, Pivalinsäure, Hydroxystearinsäure, Ricinolsäure, Hydroxybenzoesäure, Ferulasäure, Dimethylolpropionsäure, Weinsäure, Zitronensäure sind ebenfalls geeignete Ausgangsverbindungen zur Herstellung geeigneter Polyesterpolyole A).

Zur Herstellung der Polyesterpolyole A) können auch beliebige Gemische dieser beispielhaft genannten alkoholischen und/oder sauren Ausgangsverbindungen eingesetzt werden.

Vorzugsweise basieren die Polyesterpolyole A) auf einer Kombination von mindestens einer aromatischen und mindestens einer aliphatischen Carbonsäure, wobei das Molverhältnis von aromatischen und aliphatischen Carbonsäuren vorzugsweise von 95 : 5 bis 5 : 95, besonders bevorzugt von 80 : 20 und 20 : 80 und am meisten bevorzugt von 70 : 30 und 30 : 70 beträgt.

Die Herstellung der Polyesterpolyole aus den genannten Ausgangsverbindungen kann in an sich bekannter Weise durch Polykondensation in einem oder mehreren Reaktionsschritten, gegebenenfalls in Gegenwart von Lösungsmitteln, vorzugsweise bei Temperaturen im Bereich von 160 bis 260 °C erfolgen. Dabei können gegebenenfalls auch Katalysatoren, wie Dibutylzinnoxid, Butylchlorotindihydroxid, Butylstanansäure oder Tetrabutoxytitanat, und/oder Antioxidantien mitverwendet werden.

Neben den genannten alkoholischen und/oder sauren Ausgangsverbindungen zur Herstellung von Polyesterpolyolen A) stellen Lactone eine weitere Klasse geeigneter Ausgangsverbindungen dar. Sie lassen sich in an sich bekannterweise mit einfachen mehrwertigen Alkoholen, wie z. B. den oben beispielhaft genannten, als Startermolekülen unter Ringöffnung zu Polyesterpolyolen A) umsetzen. Geeignete Lactone sind beispielsweise β-Propiolacton, γ -Butyrolacton, γ - und δ -Valerolacton, ε -Caprolacton, 3,5,5- und 3,3,5-Trimethylcaprolacton oder beliebige Gemische solcher Lactone. Die Umsetzung der Lactone erfolgt im Allgemeinen in Gegenwart von Katalysatoren wie beispielsweise Lewis- oder Brönstedt-Säuren, organischen Zinn- oder Titanverbindungen bei Temperaturen von 20 bis 200 °C, vorzugsweise 50 bis 160 °C.

Bevorzugte Polyesterpolyole A) für die erfindungsgemäßen Zweikomponentensysteme sind solche eines zahlenmittleren Molekulargewichts (gelchromatografisch bestimmt nach DIN EN ISO 13885-1) von 1.000 bis 200.000 g/mol, bevorzugt 2000 bis 100.000 g/mol, besonders bevorzugt 6000 bis 80.000 g/mol. Ebenfalls oder alternativ bevorzugt haben die Polyesterpolyole A) Hydroxylzahlen im Bereich von 0 bis 120 mg KOH/g, besonders bevorzugt 0,1 bis 60 mg KOH/g und am meisten bevorzugt 1 bis 30 mg KOH/g.

Besonders bevorzugte Polyesterpolyole A) weisen ein durchschnittliches Gewichtsmolekulargewicht Mw (bestimmt nach DIN EN ISO 13885-1) im Bereich von 5000 bis 100.000 g/mol, besonders bevorzugt von 6.000 bis 800.000 g/mol und am meisten bevorzugt von 8000 bis 70.000 g/mol auf.

Die Säurezahl der Polyesterpolyole A) beträgt vorzugsweise von 0 bis 10 mg KOH/g, besonders bevorzugt 0 bis 5 mg KOH/g und besonders bevorzugt 0 bis 4 mg KOH/g.

Geeignete Polyetherpolyole A) sind beispielsweise solche eines mittleren, aus Funktionalität und Hydroxylzahl berechenbaren Molekulargewichtes von 1.000 bis 30.000, vorzugsweise 2.000 bis 22.000, mit einem Hydroxylgruppen-Gehalt von 0,1 bis 3 Gew.-%, vorzugsweise 0,2 bis 1,7 Gew.-%, wie sie in an sich bekannterweise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben wurden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den als Polyhydroxylverbindungen für die erfindungsgemäßen Zusammensetzungen bevorzugt eingesetzten Polyetherpolyolen handelt es sich um solche, deren Alkylenoxideinheiten zu mindestens 80 mol-%, vorzugsweise jedoch ausschließlich aus Propylenoxideinheiten bestehen.

Geeignete Polyhydroxylverbindungen A) vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 beispielhaft genannt sind, mit Diarylcarbonaten, wie z. B. Diphenylcarbonat, oder Phosgen herstellen lassen.

Geeignete Polyhydroxylverbindungen A) vom Polyestercarbonattyp sind insbesondere die an sich bekannten Estergruppen- und Carbonatgruppen aufweisende Diole, wie sie beispielsweise gemäß der Lehre der DE-AS 1 770 245 durch Umsetzung zweiwertiger Alkohole mit Lactonen der oben beispielhaft genannten Art, insbesondere ε -Caprolacton und anschließende Reaktion der dabei entstehenden Polyesterdiole mit Diphenylcarbonat erhalten werden können.

Besonders bevorzugte Polyole für die Komponente A) der erfindungsgemäßen Zweikomponenten-Polyurethanklebstoffsysteme sind Polyesterpolyole der genannten Art.

Die Komponente A) kann gegebenenfalls mit geeigneten Lösemitteln, beispielsweise den nachstehend bei der Herstellung der Polyisocyanatkomponente B) beschriebenen gegenüber Isocyanatgruppen inerten Lösemitteln, verdünnt werden. Falls überhaupt kommen diese dabei in einer Menge von bis zu 40 Gew.-%, vorzugsweise 30 Gew.-%, besonders bevorzugt 20 Gew.-%, bezogen auf die Komponente A) zum Einsatz.

### Komponente B)

Die erfindungsgemäßen Zweikomponentensysteme für Polyurethanklebstoffe enthalten eine Komponente B), umfassend ein Polyisocyanatgemisch, enthaltend mindestens ein Polyisocyanat M) und mindestens ein von M) verschiedenes Polyisocyanat N), vorzugsweise in einem Gewichtsverhältnis zueinander von 20 : 80 bis 90 : 10, bevorzugt von 25 : 75 bis 85 : 15 und besonders bevorzugt von 30 : 70 bis 80 : 20 vorliegen.

Das Polyisocyanatgemisch stellt eine physikalische Abmischung dar und unterscheidet sich somit von einem rein chemisch auf direktem Weg hergestellten Polyisocyanat beispielsweise hinsichtlich der mittels Gelpermeationschromatographie gemäß DIN EN ISO 13885-1:2021-11 bestimmbaren Oligomerenverteilung.

Das Polyisocyanatgemisch weist, jeweils bezogen auf das lösemittelfreie Festharz, eine Farbzahl von unter 100 APHA, vorzugsweise von unter 80 APHA, besonders bevorzugt von unter 60 APHA, und/oder einen NCO-Gehalt von 6,0 bis 24,4 Gew.-%, vorzugsweise 6,8 bis 23,2 Gew.-%, besonders bevorzugt 7,0 bis 22,2 Gew.-%, und/oder einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, auf.

Vorzugsweise beträgt die Viskosität bei 23°C des Polyisocyanatgemischs, gemessen nach DIN EN ISO 3219:1994-10 bei einer Scherrate von 250 s⁻¹, von weniger als 5000 mPas, bevorzugt weniger als 4000 mPas, besonders bevorzugt weniger als 3000 mPas und ganz besonders bevorzugt weniger als 2000 mPas auf.

Das mindestens eine Polyisocyanat M) wird mit dem mindestens einen Polyisocyanat N) so gemischt, dass das Polyisocyanatgemisch B) erhalten wird und die Polyisocyanate M) und N) im oben genannten Gewichtsverhältnis zueinander vorliegen. Dabei können durch geeignete Wahl der Mischungsverhältnisse in den genannten Grenzen Eigenschaften, wie z. B Viskosität, NCO-Gehalt und -Funktionalität, der Polyisocyanatgemische gezielt eingestellt werden. Das Vermischen erfolgt nach beliebigen Methoden und in beliebiger Reihenfolge, bei einer Temperatur von 0 bis 60°C, vorzugsweise 10 bis 50°C, besonders bevorzugt 20 bis 40°C, gegebenenfalls unter Inertgasatmosphäre, vorzugsweise unter Ausschluss von Feuchtigkeit.

Das Vermischen wird bevorzugt lösemittelfrei durchgeführt. Gegebenenfalls können aber auch geeignete, gegenüber den reaktiven Gruppen der Polyisocyanate M) und N) inerte Lösemittel mitverwendet werden. Hierfür geeignet sind sowohl unter Verwendung fossiler Rohstoffe oder auch aus nachwachsenden Rohstoffen hergestellte Lösemittel, insbesondere die an sich bekannten üblichen Lösemittel, wie z. B. Ethylacetat, Butylacetat, Ethylenglykolmonomethyl- oder -ethyletheracetat, 1-Methoxypropyl-2-acetat, 3-Methoxy-n-butylacetat, Ethyl(-)-L-Lactat, Aceton, 2-Butanon, 4-Methyl-2-pentanon, Cyclohexanon, Dihydrolevoglucosenon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösemittel wie Dimethylfuran, 2-Methyltetrahydrofuran, Dimethylisosorbid (DMI), γ-Valerolacton, Propylenglykoldiacetat, Diethylenglykoldimethylether, Dipropylenglykoldimethylether, Diethylenglykolethyl- und butyletheracetat, N-Methylpyrrolidon und N-Methylcaprolactam, oder beliebige Gemische solcher Lösemittel.

Zur Herstellung der Polyisocyanatkomponente B) werden 20 bis 90 Gewichtsteile, besonders bevorzugt 25 bis 85 Gewichtsteile, ganz besonders bevorzugt 30 bis 80 Gewichtsteile des Polyisocyanates M) und 10 bis 80 Gewichtsteile, bevorzugt 15 bis 75 Gewichtsteile, ganz besonders bevorzugt 20 bis 70 Gewichtsteile des Polyisocyanates N) vermischt. Bei Mitverwendung von einem oder mehreren Lösemitteln können diese entweder in dem mindestens einen Polyisocyanat M) und/oder in dem mindestens einen Polyisocyanat N), vorzugsweise in dem mindestens einen Polyisocyanat N) bereits vor Beginn des Vermischens enthalten sein. Sie können beim erfindungsgemäßen Verfahren gegebenenfalls aber auch nach Beendigung oder zu einem beliebigen Zeitpunkt während des eigentlichen Mischvorgangs zugegeben werden.

Falls überhaupt kommen Lösemittel bei der Herstellung der Polyisocyanatkomponente B) in einer Menge von bis zu 40 Gew.-%, vorzugsweise 30 Gew.-%, besonders bevorzugt 20 Gew.-%, bezogen auf die Summe aus Polyisocyanat M), Polyisocyanat N) und Lösemittel zum Einsatz.

Im Folgenden werden die Polyisocyanate M) und N) weiter beschrieben und bevorzugte Ausgestaltungen genannt.

### Polyisocyanat M)

Das Polyisocyanat M) ist ein spezielles PDI-Allophanatpolyisocyanat und wird beschrieben durch die allgemeine Formel (I). Bevorzugt ist eine allgemeine Formel (I) des mindestens einen Polyisocyanates M), 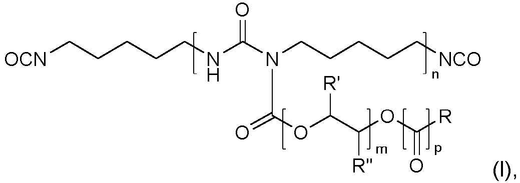 in welcher
- R: für einen linearen oder verzweigten, gesättigten oder ungesättigten aliphatischen und/oder gesättigten oder ungesättigten cycloaliphatischen Rest mit (8 bis 20) - p, besonders bevorzugt mit (10 bis 18) - p und ganz besonders bevorzugt mit (12 bis 14) - p Kohlenstoffatomen, der gegebenenfalls substituiert sein kann, steht,

- R' und R": unabhängig voneinander für Wasserstoff oder einen aliphatischen Rest mit 1 bis 10 Kohlenstoffatomen stehen, wobei mindestens einer der Reste R' und R" für Wasserstoff steht,
- n: für eine ganze Zahl von 1 bis 12,
- m: für eine ganze Zahl von 1 bis 7, besonders bevorzugt für eine ganze Zahl von 2 bis 5 und ganz besonders bevorzugt für eine ganze Zahl von2 bis 4, und
- p: für 0 oder 1 steht.

Das zur Herstellung des Polyisocyanates M) eingesetzte 1,5-Diisocyanatopentan (vorliegend auch als Pentamethylendiisocyanat oder PDI bezeichnet) kann auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan hergestellt werden.

Vorzugsweise erfolgt die Herstellung des Polyisocyanates M) durch Umsetzung von 1,5-Diisocyanatopentan mit mindestens einem Alkohol X) der allgemeinen Formel (II) 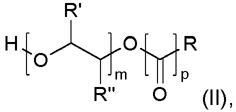 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindesten einer der Reste R' und R" für Wasserstoff steht,
- m: für eine ganze Zahl von 1 bis 10 und
- p: für 0 oder 1 steht.
Bevorzugt wird 1,5-Diisocyanatopentan mit mindestens einem Alkohol X) der allgemeinen Formel (II) umgesetzt, 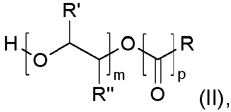 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,

- R' und R": unabhängig voneinander für Wasserstoff oder einen aliphatischen Rest mit 1 bis 10 Kohlenstoffatomen stehen, wobei mindestens einer der Reste R' und R" für Wasserstoff steht,
- m: für eine ganze Zahl von 1 bis 10 und
- p: für 0 oder 1 steht.

Als alkoholische Komponente X) kommt bei der Herstellung des Polyisocyanates M) mindestens ein Alkohol der allgemeinen Formel (II), 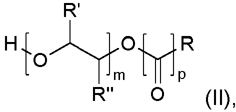 zum Einsatz, in welcher
- R: für einen linearen oder verzweigten, gesättigten oder ungesättigten aliphatischen und/oder gesättigten oder ungesättigten cycloaliphatischen Rest mit (6 bis 22) - p, vorzugsweise mit (8 bis 20) - p, besonders bevorzugt mit (10 bis 18) - p und ganz besonders bevorzugt mit (12 bis 14) - p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R' und R" für Wasserstoff steht, und
- m: für eine ganze Zahl von 1 bis 10, vorzugsweise für eine ganze Zahl von 1 bis 7, besonders bevorzugt für eine ganze Zahl von 2 bis 5 und ganz besonders bevorzugt für eine ganze Zahl von 2 bis 4, und
- p: für 0 oder 1 steht.
Bei diesen Alkoholen handelt es sich beispielsweise um die an sich bekannten Alkoxylierungsprodukte von Fettalkoholen der allgemeinen Formel (III)

R¹-OH (III),

in welcher
- R¹: für einen linearen oder verzweigten, gesättigten oder ungesättigten aliphatischen und/oder gesättigten oder ungesättigten cycloaliphatischen Rest mit 6 bis 22, vorzugsweise 8 bis 20, besonders bevorzugt 10 bis 18, ganz besonders bevorzugt 12 bis 14 Kohlenstoffatomen, der jeweils gegebenenfalls substituiert sein kann, steht,
und/oder Fettsäuren der allgemeinen Formel (IV)

R²-COOH (IV),

in welcher
- R²: für einen linearen oder verzweigten, gesättigten oder ungesättigten aliphatischen und/oder gesättigten oder ungesättigten cycloaliphatischen Rest mit 5 bis 21, vorzugsweise 7 bis 19, besonders bevorzugt 9 bis 17, ganz besonders bevorzugt 11 bis 13 Kohlenstoffatomen, der jeweils gegebenenfalls substituiert sein kann, steht.

Bei vorgenannten Fettalkoholen der allgemeinen Formel (III) steht in der allgemeinen Formel (I) und der allgemeinen Formel (II) p für 0 und R¹ für R, inklusive der genannten Bevorzugungen für R¹. Ebenso sind als Reste R¹ und auch R beispielhaft geeignet, bevorzugt und besonders bevorzugt die von den nachstehend als beispielhaft geeignet, bevorzugt und besonders bevorzugt genannten Fettalkoholen abgeleiteten Reste genannt.

Bei vorgenannten Fettsäuren der allgemeinen Formel (IV) steht in der allgemeinen Formel (I) und der allgemeinen Formel (II) p für 1 und R² für R, inklusive der genannten Bevorzugungen für R². Ebenso sind als Reste R² und auch R beispielhaft geeignet, bevorzugt und besonders bevorzugt die von den nachstehend als beispielhaft geeignet, bevorzugt und besonders bevorzugt genannten Fettsäuren abgeleiteten Reste genannt.

Für die Alkoxylierung geeignete Fettalkohole sind beispielsweise 1-Hexanol (Capronalkohol), 1-Heptanol (Önanthalkohol), 1-Octanol (Caprylalkohol), 1-Nonylalkohol (Pelargonalkohol), 1-Decanol (Caprinalkohol), 1-Dodecanol (Laurylalkohol), 1-Tetradecanol (Myristylalkohol), 1-Hexadecanol (Cetylalkohol), 1-Heptadecanol (Margarylalkohol), 1-Octadecanol (Stearylalkohol), 1-Eicosanol (Arachidylalkohol), 1-Docosanol (Behenylalkohol), 1-Tetracosanol (Lignocerylalkohol), 1-Hexacosanol (Cerylalkohol), 1-Octacosanol (Montanylalkohol), 1-Triacontanol (Melissylalkohol), *cis*-9-Hexadecen-1-ol (Palmitoleylalkohol), *cis*-9-Octadecen-1-ol (Oleylalkohol), *trans*-9-Octadecen-1-ol (Elaidylalkohol), *cis*-11-Octadecen-1-ol, *cis*,*cis*-9,12-Octadecadien-1-ol (Linoleylalkohol) und 6,9,12-Octadecatrien-1-ol (γ-Linolenylalkohol), als geeignete Fettsäuren seien beispielsweise Hexansäure (Capronsäure), Heptansäure (Önanthsäure), Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure (Margarinsäure), Octadecansäure (Stearinsäure), Nonadecansäure, Eicosan-/Icosansäure (Arachinsäure), Heneicosansäure und Docosansäure (Behensäure), *cis*-9-Octadecensäure (Ölsäure) und *cis*-13-Docosensäure (Erucasäure) genannt.

Bevorzugt sind dabei solche Fettalkohole und Fettsäuren, die unter Verwendung pflanzlicher und tierischer Öle und Fette hergestellt wurden.

Besonders bevorzugte Fettalkohole zur Herstellung der alkoholischen Komponente X) sind 1-Decanol, 1-Dodecanol, 1-Tetradecanol und 1-Octadecanol, ganz besonders bevorzugt 1-Dodecanol und 1-Tetradecanol, besonders bevorzugte Fettsäuren sind Decansäure, Dodecansäure, Tetradecansäure und Hexadecansäure, ganz besonders bevorzugt Dodecansäure, Tetradecansäure. Zur Herstellung der alkoholischen Komponente X) durch Alkoxylierung der genannten Fettalkohole und/oder Fettsäuren sind beliebige Alkylenoxide mit 2 bis 12 Kohlenstoffatomen, wie z. B. Ethylenoxid, Propylenoxid, 1,2-Epoxybutan, 1,2-Epoxyhexan, 1,2-Epoxyoctan oder 1,2-Epoxydodecan, geeignet, die in beliebiger Reihenfolge oder auch im Gemisch bei der Alkoxylierungsreaktion eingesetzt werden können. Bevorzugte Alkylenoxide sind solche mit 2 bis 4 Kohlenstoffatomen. Besonders bevorzugte Alkylenoxide zur Herstellung der alkoholischen Komponente X) sind Ethylenoxid und Propylenoxid.

Aus den vorstehend beispielweise und bevorzugt genannten Alkylenoxiden ergibt sich die Anzahl der Kohlenstoffatome der Reste R' oder R" in der allgemeinen Formel (I). Somit stehen R' und R" in der allgemeinen Formel (I) und/oder Formel (II) unabhängig voneinander für Wasserstoff oder einen aliphatischen Rest mit bevorzugt 1 bis 2 Kohlenstoffatomen, wobei mindestens einer der Reste R' und R" für Wasserstoff steht.

Geeignete alkoholische Komponenten X) zur Herstellung der Polyisocyanate M) sind insbesondere Alkoxylierungsprodukte der genannten Fettsäuren und/oder Fettalkohole, die im statistischen Mittel 1 bis 10, vorzugsweise 1 bis 7, besonders bevorzugt 2 bis 5 und ganz besonders bevorzugt 2 bis 4 Alkylenoxideinheiten aufweisen. Die vorstehend als statistische Mittel genannten Zahlen und Zahlenbereiche ergeben die erfindungsgemäßen und bevorzugten ganzen Zahlen m in der allgemeinen Formel (I) und der allgemeinen Formel (II).

In einer weiteren bevorzugten Ausführungsform kommen als alkoholische Komponente X) Alkoxylierungsprodukte zum Einsatz, die im statistischen Mittel 1 bis 10, vorzugsweise 1 bis 7, besonders bevorzugt 2 bis 5 und ganz besonders bevorzugt 2 bis 4 Alkylenoxideinheiten aufweisen, wobei die die Alkylenoxideinheiten vorzugsweise Ethylenoxid- und/oder Propylenoxideinheiten umfassen oder daraus bestehen. Die vorstehend als statistische Mittel genannten Zahlen und Zahlenbereiche ergeben die erfindungsgemäßen und bevorzugten ganzen Zahlen m in der allgemeinen Formel (I) und der allgemeinen Formel (II).

Die alkoholischen Komponenten X) weisen vorzugsweise einen pH-Wert, gemessen an einer 1 %igen Lösung der jeweiligen alkoholischen Komponente X) in Wasser, von 4,0 bis 8,0, vorzugsweise von 4,5 bis 7,5, besonders bevorzugt von 5,0 bis 7,0 und/oder Gesamtgehalte an Alkalikationen von maximal 100 ppm, vorzugsweise von 1 bis 70 ppm, besonders bevorzugt von 2 bis 50 ppm auf.

Gegebenenfalls kann die Komponente X) neben den genannten Alkoxylierungsprodukten von Fettalkoholen und/oder Fettsäuren in untergeordneter Menge weitere alkoholische Verbindungen enthalten.

Hierbei handelt es sich beispielsweise um Monoalkohole, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol und Tetrahydrofurfurylalkohol, unverzweigte aliphatische Diole, wie z. B. 1,2-Ethandiol, 1,3-Propandiol, 1,4-Butandiol, 1,5-Pentandiol, 1,6-Hexandiol, 1,7-Heptandiol und 1,8-Octandiol, cycloaliphatische Diole, wie z. B. 1,2- und 1,4-Cyclohexandiol, 1,4-Cyclohexandimethanol, 4,4'-(1-Methylethyliden)-biscyclohexanol, Triole wie z. B. 1,2,3-Propantriol, 1,1,1-Trimethylolethan, 1,2,6-Hexantriol, 1,1,1-Trimethylolpropan, und 1,3,5-Tris(2-hydroxyethyl)isocyanurat, tetrafunktionelle Alkohole, wie z. B. 2,2-Bis(hydroxymethyl)-1,3-propandiol oder beliebige Gemische solcher Alkohole.

Falls überhaupt, kommen diese weiteren alkoholischen Verbindungen zur Herstellung des Polyisocyanates M) in Mengen von maximal 25 Gew.-%, vorzugsweis maximal 20 Gew.-%, besonders bevorzugt maximal 15 Gew.-%, bezogen auf die eingesetzte Menge an Alkoxylierungsprodukten von Fettalkoholen und/oder Fettsäuren zum Einsatz.

Zur Herstellung des Polyisocyanates M) wird 1,5-Diisocyanatopentan mit mindestens einer alkoholischen Komponente X) vorzugsweise bei Temperaturen von 40 bis 200 °C, besonders bevorzugt von 60 bis 180 °C, und/oder unter Einhaltung eines Äquivalent-Verhältnisses von Isocyanatgruppen zu gegenüber Isocyanaten reaktiven Gruppen von vorzugsweise 4:1 bis 50:1, besonders bevorzugt von 5:1 bis 30:1, ganz besonders bevorzugt von 10:1 bis 25:1, zu Allophanatpolyisocyanaten umgesetzt.

Das Verfahren zur Herstellung des Polyisocyanates M) kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 (Seite 2, Zeilen 73 bis 87) beschriebenen Art, um Alkylierungsmittel der in der US-A-3 769 318 (Spalte 6, Zeilen 5 bis 49) beschriebenen Art oder um starke Säuren, wie sie in der EP-A-0 000 194 (Seite 13, Zeile 27 bis Seite 14, Zeilen1 bis 18) beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Eisen-(III)-chlorid, Kaliumoctoat, Mangan-, Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung des Polyisocyanates M) sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren zur Herstellung des Polyisocyanates M) sind Zink- und/oder Zirconiumverbindungen der obengenannten Art. Ganz besonders bevorzugt ist die Verwendung von mindestens Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen bei der Herstellung des Polyisocyanates M), falls überhaupt, vorzugsweise in einer Menge von 0,001 bis 5 Gew.-%, besonders bevorzugt 0,005 bis 1 Gew.-%, bezogen auf das Gesamtgewicht der Reaktionspartner PDI und X) zum Einsatz und können sowohl vor Reaktionsbeginn als auch zu jedem Zeitpunkt der Reaktion zugesetzt werden.

Bevorzugt kommt Bleioctoat nicht als Katalysator bei der Herstellung der Polyisocyanate M) zum Einsatz und damit ist ein erfindungsgemäßes Polyisocyanatgemisch bevorzugt, welches frei von katalytischen Mengen, besonders bevorzugt frei von nachweisbaren Mengen von Bleioctoat ist.

Die Herstellung des Polyisocyanates M) erfolgt vorzugsweise lösemittelfrei. Gegebenenfalls können aber auch geeignete, gegenüber den reaktiven Gruppen der Ausgangskomponenten inerte Lösemittel mitverwendet werden. Geeignete Lösemittel sind beispielsweise die oben als geeignete Lösemittel für das erfindungsgemäße Verfahren beschriebene Lösemittel oder beliebige Gemische solcher Lösemittel.

In einer möglichen Ausführungsform wird bei der Herstellung des Polyisocyanates M) das PDI - gegebenenfalls unter Inertgas, wie beispielsweise Stickstoff, und gegebenenfalls in Gegenwart eines geeigneten Lösungsmittels der genannten Art - bei einer Temperatur zwischen 20 und 100°C vorgelegt. Anschließend wird die alkoholische Komponente X) in der oben angegebenen Menge zugegeben und die Reaktionstemperatur für die Urethanisierung gegebenenfalls durch eine geeignete Maßnahme (Heizen oder Kühlen) auf eine Temperatur von 30 bis 120°C, vorzugsweise von 50 bis 100°C eingestellt. Im Anschluss an die Urethanisierungsreaktion, d.h. wenn der einem vollständigen Umsatz von Isocyanat- und Hydroxylgruppen theoretisch entsprechende NCO-Gehalt erreicht ist, kann die Allophanatisierung beispielsweise ohne Zusatz eines Katalysators durch Erhitzen des Reaktionsgemisches auf eine Temperatur von 140 bis 200°C gestartet werden. Vorzugsweise kommen zur Beschleunigung der Allophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 80 bis 120°C, in der Regel ausreichend sind.

In einer anderen möglichen Ausführungsform des Verfahrens zur Herstellung des Polyisocyanates M) wird der gegebenenfalls mitzuverwendenden Katalysator dem PDI und/oder der alkoholischen Komponente X) bereits vor Beginn der eigentlichen Umsetzung zugemischt. In diesem Fall reagieren die sich intermediär bildenden Urethangruppen spontan weiter zur gewünschten Allophanatstruktur. Bei dieser Art der einstufigen Reaktionsführung wird das gegebenenfalls den Katalysator enthaltende PDI - gegebenenfalls unter Inertgas, wie beispielsweise Stickstoff, und gegebenenfalls in Gegenwart eines geeigneten Lösungsmittels der genannten Art - in der Regel bei für die Allophanatisierung optimalen Temperaturen im Bereich von 60 bis 140°C, vorzugsweise 80 bis 120°C, vorgelegt und mit der gegebenenfalls den Katalysator enthaltenden alkoholischen Komponente X) zur Reaktion gebracht.

Es ist aber auch möglich, den Katalysator dem Reaktionsgemisch zu einem beliebigen Zeitpunkt während der Urethanisierungsreaktion zuzusetzen. Bei dieser Ausführungsform des Verfahrens wird für die vor der Katalysatorzugabe ablaufende reine Urethanisierungsreaktion in der Regel eine Temperatur im Bereich von 30 bis 120°C, vorzugsweise von 50 bis 100°C, eingestellt. Nach Zugabe eines geeigneten Katalysators wird die Allophanatisierungreaktion schließlich bei Temperaturen von in der Regel 60 bis 140°C, vorzugsweise von 80 bis 120°C, durchgeführt.

Der Verlauf der Umsetzung kann beim Verfahren zur Herstellung des Polyisocyanates M) durch z. B. titrimetrische Bestimmung des NCO-Gehaltes nach DIN EN ISO 11909:2007-05 verfolgt werden. Nach Erreichen des angestrebten NCO-Gehaltes, vorzugsweise wenn der Allophanatisierungsgrad (d. h. der aus dem NCO-Gehalt errechenbare prozentuale Anteil der zu Allophanatgruppen umgesetzten, aus den Hydroxylgruppen der Komponente X) sich intermediär bildenden Urethangruppen) des Reaktionsgemisches mindestens 80 %, besonders bevorzugt mindestens 90 % beträgt, ganz besonders bevorzugt wenn der einer vollständigen Allophanatisierung entsprechende NCO-Gehalt erreicht oder unterschritten ist, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im Allgemeinen aber durch Zugabe geeigneter Katalysatorgifte, beispielsweise Säuren, wie Phosphorsäure, oder Säurechloride, wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigem PDI, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben dem nicht umgesetzten PDI und gegebenenfalls mitverwendeten Lösungsmitteln bei Verzicht auf den Einsatz eines Katalysatorgiftes gegebenenfalls aktiven Katalysator enthalten, können problemlos zur erneuten Allophanatisierung im Verfahren zur Herstellung des Polyisocyanates M) eingesetzt werden.

In einer weiteren Ausführungsform des Verfahrens zur Herstellung des Polyisocyanates M) werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Ausführung des Verfahrens zu ihrer Herstellung stellen die Polyisocyanate M) klare, praktisch farblose Polyisocyanate dar, die, jeweils bezogen auf das lösemittelfreie Festharz, Farbzahlen von unter 100 APHA, vorzugsweise von unter 80 APHA, besonders bevorzugt von unter 60 APHA, und/oder einen NCO-Gehalt von 6,0 bis 18,0 Gew.-%, vorzugsweise 8,0 bis 16,0 Gew.-%, besonders bevorzugt 10,0 bis 15,0 Gew.-%, und/oder einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, aufweisen.

Die Viskositäten der Polyisocyanate M) betragen gemessen nach DIN EN ISO 3219:1994-10 bei einer Scherrate von 250 s-1 bei 23°C vorzugsweise weniger als 500 mPas, besonders bevorzugt weniger als 400 mPas, ganz besonders bevorzugt weniger als 300 mPas.

### Polyisocyanat N)

Polyisocyanate N) für das erfindungsgemäße Polyisocyanatgemisch sowie das erfindungsgemäße Verfahren sind beliebige, durch Modifizierung einfacher aliphatischer, cycloaliphatischer, araliphatischer und/oder aromatischer Diisocyanate und/oder Triisocyanate, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind oder um beliebige Gemische solcher Polyisocyanate.

Geeignete Diisocyanate und Triisocyanate zur Herstellung der Polyisocyanate N) sind beliebige, auf verschiedene Weise, beispielsweise durch Phosgenierung der korrespondierenden Diamine oder Triamine, die sowohl unter Verwendung fossiler Rohstoffe oder auch aus nachwachsenden Rohstoffen, gegebenenfalls massenbilanziert hergestellt werden können, in der Flüssig- oder Gasphase oder auf phosgenfreien Weg, wie z. B. durch thermische Urethanspaltung, zugängliche Diisocyanate und Triisocyanate, vorzugsweise solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclo-hexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-Isocyanato-1-methyl-4(3)isocyanato-methylcyclohexan, Bis-(isocyanatomethyl)-norbornan (NBDI), 4-Isocyanatomethyl-1,8-octandiisocyanat (Triisocyanatononan; TIN), 1,3- und 1,4-Bis(isocyanatomethyl)benzol (Xylylendiisocyanat, XDI), 1,3- und 1,4-Bis-(2-isocyanato-prop-2-yl)-benzol (TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Gegebenenfalls können bei der Modifizierung der genannten Diisocyanate und/oder Triisocyanate zu Polyisocyanaten N) in untergeordneten Mengen auch Monoisocyanate, insbesondere solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat, mitverwendet werden. Falls überhaupt kommen Monoisocyanate dabei in Mengen von bis 30 Gew.-%, vorzugsweise bis zu 20 Gew.-%, besonders bevorzugt bis zu 10 Gew.-%, bezogen auf die Gesamtmenge an Mono-, Di- und Triisocyanaten, zum Einsatz

Bei der Herstellung der Polyisocyanate N) schließt sich an die eigentliche Modifizierungsreaktion in der Regel ein weiterer Verfahrensschritt zur Abtrennung der nicht umgesetzten überschüssigen monomeren Diisocyanate und/oder Triisocyanate und gegebenenfalls Monoisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

In einer weiteren bevorzugten Ausführungsform weist das Polyisocyanat N) aliphatisch, araliphatisch und/oder cycloaliphatisch gebundene Isocyanatgruppen auf, bevorzugt auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan ist und besonders bevorzugt mindestens Isocyanuratstrukturen auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan enthält und ganz besonders bevorzugt Isocyanuratstrukturen auf Basis von 1,5-Diisocyanatopentan, 1,6-Diisocyanatohexan und/oder 1-Isocyanato-3,3,5-trimethyl-5-isocyanatomethylcyclohexan enthält.

In einer weiteren bevorzugten Ausführungsform weist das Polyisocyanat N) aromatisch gebundene Isocyanatgruppen auf, bevorzugt aus monomerem 2,4- und/oder 2,6-TDI durch Umsetzung mit Polyolen und/oder Oligomerisierung, vorzugsweise Trimerisierung, erhältliche Polyisocyanate mit Urethan- und/oder Isocyanuratstruktur aufweist oder um Mischungen aus mindestens zwei solcher Polyisocyanate. Die Polyisocyanate können nach beliebigen bekannten Verfahren, beispielsweise den in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 oder JP 56059828 beschriebenen, hergestellt werden.

Ebenfalls als Polyisocyanate N) geeignet sind schließlich auch solche, die sowohl aromatische als auch aliphatische Isocyanatgruppen tragen, bevorzugt gemischte Trimerisate bzw. Allophanate von 2,4- und/oder 2,6-Diisocyanatotoluol mit 1,6-Diisocyanatohexan. Solche Polyisocyanate sind beispielsweise in DE-A 1 670 667, EP-A 0 078 991, EP-A 0 696 606 und EP-A 0 807 623 beschriebene, gemischte Trimerisate bzw. Allophanate von 2,4- und/oder 2,6-TDI mit HDI.

Bevorzugt kommen im erfindungsgemäßen Polyisocyanatgemisch als Polyisocyanat N) Polyisocyanate der genannten Art zum Einsatz, die, jeweils bezogen auf die lösemittelfreie Form, einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, und einen Gehalt an monomeren Diisocyanaten von weniger als 0,14 Gew.-%, vorzugsweise weniger als 0,12 Gew.-%, besonders bevorzugt von weniger als 0,10 Gew.-% aufweisen. Für den alternativen, optionalen Fall, dass Triisocyanate und/oder Monoisocyanate zur Herstellung der Polyisocyanate N) eingesetzt wurden, beziehen sich die vorstehend genannten Rest-Monomeren Gehalte von weniger als 0,14 Gew.-%, vorzugsweise weniger als 0,12 Gew.-%, besonders bevorzugt von weniger als 0,10 Gew.-% auf die Summe aller Rest-Gehalte aller eingesetzten Diisocyanate, Triisocyanate und Monoisocyanate. Die NCO-Gehalte werden nach DIN EN ISO 11909:2007-05, die Rest-Monomeren Gehalte nach DIN EN ISO 10283:2007-11 gaschromatographisch mit internem Standard bestimmt.

Ganz besonders bevorzugte Polyisocyanate N) sind mindestens Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan und am meisten bevorzugt mindestens Isocyanuratstrukturen enthaltende Polyisocyanate auf Basis von 1,5-Diisocyanatopentan.

### Zweikomponenten-Polyurethanklebstoffsystem

Die erfindungsgemäßen Zweikomponenten-Polyurethanklebstoffsysteme enthalten 70 bis 99,9 Gew.-% der Komponente A) und 0,1 bis 30 Gew.-% der Komponente B). Besonders bevorzugte Zweikomponenten-Polyurethanklebstoffe enthalten 80 bis 99 Gew.-% der Komponente A) und 1 bis 20 Gew.-% der Komponente B). Ganz besonders bevorzugte Zweikomponenten-Polyurethanklebstoffe enthalten 90 bis 97 Gew.-% der Komponente A) und 3 bis 10 Gew.-% der Komponente B).

Die Zweikomponentensysteme für Polyurethanklebstoffe können durch einfaches Mischen der Komponenten A) und B) hergestellt werden. Bevorzugt wird die Komponente A) bzw. das mindestens eine Polyol vorgelegt und die Komponente B) bzw. das mindestens eine Polyisocyanagemisch unter Rühren zugegeben.

Um das Vermischen der Komponenten A) und B) zu erleichtern, können sowohl das mindestens eine Polyol als auch das mindestens eine Polyisocyanatgemisch gegebenenfalls mit geeigneten Lösemitteln, beispielsweise den vorstehend bei der Herstellung der Polyisocyanate beschriebenen gegenüber Isocyanatgruppen inerten Lösemitteln, verdünnt werden.

Die erfindungsgemäßen Zweikomponenten-Polyurethanklebstoffsysteme können alleine oder mit den in der Beschichtungs- und Klebstofftechnologie bekannten Bindemitteln, Hilfsstoffen und Zugschlagstoffen, insbesondere Lichtschutzmitteln, wie UV-Absorbern und sterisch gehinderte Aminen (HALS), Antioxidantien, Füllstoffen und weiteren Hilfsmitteln, z. B. Verlaufsmitteln, Reaktivverdünnern, Weichmachern, Katalysatoren, Hilfslösemitteln und/oder Verdickern und Additiven, wie beispielsweise Pigmenten, Farbstoffen oder Mattierungsmitteln, eingesetzt werden. Auch Klebrigmacher ("Tackifier") können gegebenenfalls zugegeben werden.

Diese Bindemittel, Hilfsstoffe und Zugschlagstoffe können den erfindungsgemäßen Zweikomponenten-Polyurethanklebstoffsystemen unmittelbar vor der Verarbeitung zugegeben werden. Es ist aber auch möglich, zumindest einen Teil dieser Stoffe vor oder während der Dispergierung des Bindemittels zuzugeben.

Die Auswahl und die Dosierung dieser Stoffe, die den Einzelkomponenten und/oder der Gesamtmischung zugegeben werden können, sind dem Fachmann prinzipiell bekannt und können ohne ungebührlich hohen Aufwand auf den speziellen Anwendungsfall zugeschnitten und durch einfache Vorversuche ermittelt werden. Optional in den erfindungsgemäßen Zweikomponentenklebstoffsystemen enthaltene Lösemittel können in den vorstehend bereits beschriebenen Gewichtsanteilen in Komponente A) und/oder in Komponente B) enthalten sein und.

Die Zugabe der genannten Hilfs- und Zugschlagstoffe zu den erfindungsgemäßen Zweikomponentenklebstoffsystemen erfolgt falls überhaupt in solchen Mengen, dass der kombinierte Anteil der Komponenten A) und B), bezogen auf die Gesamtmenge des Zweikomponentensystems, 80,0 Gew.-% oder mehr, bevorzugt 90,0 Gew.-% oder mehr, mehr bevorzugt 95,0 Gew.-% oder mehr, noch mehr bevorzugt 99,0 Gew.-% oder mehr, am meisten bevorzugt 99,5 Gew.-% oder mehr oder 100,0 Gew.-%, beträgt.

Werden Hilfs- und Zugschlagstoffe vor dem Vermischen der Komponenten A) und B) dem Polyisocyanatgemisch B) zugesetzt, erfolgt dies falls überhaupt in solchen Mengen, dass der kombinierte Anteil der Polyisocyanate M) und N), bezogen auf die Gesamtmenge des Polyisocyanatgemischs B), 80,0 Gew.-% oder mehr, bevorzugt 90,0 Gew.-% oder mehr, mehr bevorzugt 95,0 Gew.-% oder mehr, noch mehr bevorzugt 99,0 Gew.-% oder mehr, am meisten bevorzugt 99,5 Gew.-% oder mehr oder 100,0 Gew.-%, beträgt.

Die erfindungsgemäßen Zweikomponentenklebstoffsysteme, die aus mindestens einer NCOreaktiven Verbindung A), vorzugsweise einer Polyhydroxylverbindung A), und einem Polyisocyanagemisch B) als Vernetzerkomponente bestehen, eignen sich hervorragend zur Verklebung unterschiedlicher Materialien, wie z. B. Holz, Metall, Kunststoff, Papier, Textil, Keramik, Glas oder Stein.

Die erfindungsgemäßen Zweikomponentenklebstoffsysteme eignen sich für unterschiedliche Fügeverfahren, wie sie beispielsweise in Brockmann et al Klebtechnik, Wiley CH, 2005 Weinheim ISBN 978-3-527-31091-6, Kapitel 8 und Meier-Westhues et al, Polyurethane Lacke Kleb- und Dichtstoffe, ISBN 3-86630-896-5 Hannover Vincenz 2007, insbesondere in Kapitel 6.3.2 beschrieben sind.

Besonders geeignet sind die erfindungsgemäßen Zweikomponentenklebstoffsysteme zur Verklebung unterschiedlicher Materialien bei der Herstellung von Mehrschichtverbunden, insbesondere von Mehrschichtverbunden mit mindesten einer Metallfolie, wie sie beispielsweise zur Verpackung von Lebensmitteln eingesetzt werden. Sie führen dabei zu hoher Wärmebeständigkeit der Verklebung und hohen Verbundfestigkeiten, die unter den Bedingungen einer Heißsterilisation nicht nur erhalten bleiben sondern sich sogar noch einmal deutlich verbessern. Eine Beschreibung dieser Anwendung findet sich in Meier-Westhues et al, Polyurethane Lacke Kleb- und Dichtstoffe, ISBN 3-86630-896-5 Hannover Vincenz 2007, insbesondere in Kapitel 6.3.4.

Ein weiterer Gegenstand der Erfindung ist ein Klebeverfahren sowie ein Verfahren zur Herstellung eines Mehrschichtverbunds umfassend oder bestehend aus folgenden Schritten:
I) Bereitstellen von wenigstens zwei Schichten,
II) Auftragen des erfindungsgemäßen Zweikomponentensystems für Polyurethanklebstoffe mittelbar oder unmittelbar auf wenigstens eine der beiden bereitgestellten Schichten,
III) Verbinden der Schichten sowie Aushärten des Zweikomponentenklebstoffsystems unter Erhalt des Mehrschichtverbundes.

Ebenfalls ein Gegenstand der Erfindung ist die Verwendung der erfindungsgemäßen Zweikomponentensysteme zur Herstellung von Mehrschichtverbunden, insbesondere als Laminierklebstoff oder als Kaschierklebstoff und besonders bevorzugt zur Herstellung von Mehrschichtverbunden, die aus einem synthetischen Substrat und einem Substrat mit metallischer Oberfläche bestehen.

Auch Gegenstand der Erfindung ist ein Mehrschichtverbund, erhältlich oder hergestellt durch das erfindungsgemäße Verfahren oder durch Verwendung der erfindungsgemäßen Zweikomponentensysteme für Polyurethanklebstoffe. Bevorzugt ist der Mehrschichtverbund ein Verpackungsmaterial oder ein Teil im Automobilinnenraum.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Restmonomerengehalte wurden nach DIN EN ISO 10283:2007-11 gaschromatographisch mit internem Standard gemessen.

Die Gehalte an Natrium- und Kaliumkationen wurden durch induktiv gekoppelte Plasma-Atom-Emissionsspektrometrie (ICP-OES) nach DIN EN ISO 11885:2009-09 nach Mikrowellenaufschluss bestimmt. Die Nachweisgrenze liegt bei diesem Verfahren bei <1 ppm.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

Die Gehalte (mol-%) der in den Polyisocyanaten M) und N) vorliegenden Allophanat-, Urethan- und gegebenenfalls Isocyanurat- und/oder Uretdionstrukturen wurden aus den Integralen protonenentkoppelter ¹³C-NMR-Spektren (aufgenommen an einem Gerät Bruker DPX-400) errechnet und beziehen sich jeweils auf die Summe an vorliegenden Allophanat-, Urethan-, Isocyanuratstrukturen und/oder Uretdionstrukturen. Im Falle von in CDCl₃ gelösten PDI- und HDI-Polyisocyanaten weisen die einzelnen Strukturelemente folgende chemische Verschiebungen (in ppm) auf: Allophanat: 155,7 und 153,8; Urethan: 156,3; Isocyanurat: 148,4; Uretdion: 157,1.

Die Herstellung von Mehrschichtverbunden wurde mit einem Hand-Laminiergerät K Control Coater Modell 623 / 624 (K101 / K202) durchgeführt. Dazu wurde eine Lamination von Aluminium-Polypropylen-Vorverbund (Actebond ASB-203 + HAT-038-S-LV (12µm Alu / 50µm cPP "Innofol") mit PET-Folie (Hostaphan RNK 2-CSR, 23µm) durchgeführt, zwischen die der jeweils zu testende Klebstoff eingebracht wurde. Hierzu wurde in das Hand-Laminiergerät der Aluminium-Vorverbund eingespannt (Aluminium nach oben). Diese Folie sowie alle weiteren Folien des Laminats lagen in DIN A4 Größe vor. Auf die erste eingespannte Folie (Aluminiumseite) wurde anschließend der Zweikomponentenklebstoff unmittelbar nach der in den Beispielen beschriebenen Herstellung am oberen Rand, in Form einer Raupe aufgetragen. Danach wurde der Klebstoff mit Hilfe eines Rakels gleichmäßig auf der Folie verteilt. Der Zweikomponentenklebstoff wurde mit einer Wärmepistole mit der Bezeichnung Steinel HL2002LE für 10 s auf Stufe 100°C erwärmt, wobei sich eine Oberflächentemperatur (Klebstoffoberseite) von 60 °C ergab. Im nächsten Schritt wurde auf die nun mit dem Klebstoff beschichtete glänzende Aluminiumseite eine Acrylat-vorbedampfte PET-Folie (Typ Hostaphan RNK 2-CSR, 23µm) kaschiert. Der so erhaltene Verbund wurde anschließend für 7 Tage bei Normklima (NK, 23 Grad C, 50% relative Luftfeuchte) gelagert.

Nach einer einwöchigen Lagerung bei Normklima wurden die erhaltenen Klebeverbunde in einem Sterilisator Systec V-65 (Systec GmbH Labortechnik, Wettenberg) mit modifiziertem Programm 1 (60 statt 30 min.) bei 121 °C über 60 min gemäß der Betriebsanleitung sterilisiert. Die Verweildauer im Sterilisator inklusive Aufheiz- und Abkühlphase betrug ca. 75 min.

Nach Entnahme aus dem Sterilisator wurden die Proben oberflächlich getrocknet, sofort und nach Lagerung bei Normklima über 24 Std. gemessen.

Zur Bestimmung der Schälfestigkeit der Verbunde (Verbundfestigkeit) wurden die Verbundfolien, wie unter dem vorherigen Punkt beschrieben hergestellt, in 15 mm breite Streifen zerschnitten. Anschließend wurden die Streifen bei 23°C in einer Universalprüfmaschine für Schälfestigkeiten der Firma Zwick (Typ 5kN Allround Table-top BT2-FA005TH.A50.002) mit einer Geschwindigkeit von 100 mm/min bei einem Winkel von 2 × 90° (180°) abgezogen und die dabei erforderliche Kraft in Newton gemessen.

### Ausgangsverbindungen

### Polyisocyanat M)

1234 g (8,0 mol) PDI wurden bei einer Temperatur von 95°C unter trockenem Stickstoff und Rühren vorgelegt und mit 0,16 g Zink-(II)-2-ethyl-1-hexanoat als Katalysator versetzt. Über einen Zeitraum von ca. 45 min wurden 309 g (1,0 mol) eines im statistischen Mittel dreifach ethoxylierten Laurylakohols (OH-Zahl: 181,8 mg KOH/g, Na-Gehalt: 28 mg/kg, K-Gehalt: < 1 mg/kg) zugetropft, wobei die Temperatur der Mischung aufgrund der exotherm einsetzenden Reaktion bis auf 100°C anstieg. Das Reaktionsgemisch wurde anschließend bei 100°C weiter gerührt bis der NCO-Gehalt nach ca. 1 h auf 35,6 % abgesunken war. Der Katalysator wurde durch Zugabe von 0,16 g ortho-Phosphorsäure deaktiviert und das nicht umgesetzte monomere PDI bei einer Temperatur von 130°C und einem Druck von 0,1 mbar im Dünnschichtverdampfer abgetrennt. Man erhielt 723 g eines praktisch farblosen klaren Polyisocyanatgemisch, das folgende Kenndaten und Zusammensetzung aufwies:

| | | |
|---|---|---|
| NCO-Gehalt: | 14,1 % | |
| monomeres PDI: | 0,03 % | |
| Viskosität (23°C): | 290 mPas | |
| Farbzahl (APHA): | 21 Hazen | |
| Zusammensetzung: | Allophanat: | 70,3 mol-% |
| | Urethan: | 4,2 mol-% |
| Isocyanurat: | | 24,9 mol-% |
| Uretdion: | | 0,6 mol-% |

### Polyisocyanat N)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| monomeres PDI: | 0,09 % |
| Viskosität (23 °C): | 9850 mPas |
| Farbzahl (Hazen): | 34 |

### Polyisocyanatgemisch B1)

30 Gewichtsteile des Polyisocyanates M) wurden bei 50°C mit 70 Gewichtsteilen des Polyisocyanates N) durch Rühren homogen gemischt. Nach Abkühlen auf Raumtemperatur lag ein Polyisocyanatgemisch B1) mit folgenden Kenndaten vor:

| | |
|---|---|
| NCO-Gehalt: | 19,5 % |
| monomeres PDI: | 0,04 % |
| Viskosität (23°C): | 3.000 mPas |
| Farbzahl (Hazen): | 25 |

### Polyisocyanatgemisch B2)

50 Gewichtsteile des Polyisocyanates M) wurden bei 50°C mit 50 Gewichtsteilen des Polyisocyanates N) durch Rühren homogen gemischt. Nach Abkühlen auf Raumtemperatur lag ein Polyisocyanatgemisch B2) mit folgenden Kenndaten vor:

| | |
|---|---|
| NCO-Gehalt: | 18,0 % |
| monomeres PDI: | 0,06 % |
| Viskosität (23°C): | 1300 mPas |
| Farbzahl (Hazen): | 28 |

### Polyolkomponente A)

Ein 4-Liter-Glasreaktor, der mit einem mechanischen Rührer, einem Thermoelement und einer Destillationsanlage mit einer Vigreux-Säule ausgestattet war, wurde mit Ethylendiol (100,0 g), Diethylenglykol (500,0 g), 1,2-Propylendiol (200,0 g), Trimethylolpropan (15,0 g), Isophthalsäure (580,0 g), Terephthalsäure (580,0 g) und Sebacinsäure (310,0 g) beschickt. Die Temperatur wurde unter einer N2-Atmosphäre allmählich, nicht schneller als 10°C pro 10 Minuten, auf 250 °C angehoben. Die Temperatur wurde bei 250° C gehalten, bis die Säurezahl von weniger als 20 mg KOH/g im Harz erreicht war. Danach wurde die Vigreux-Kolonne ausgebaut und durch eine Standard-Destillationsanlage ersetzt. Ein Titan-Isopropoxyd-Katalysator (0,2 g) wurde hinzugefügt und schrittweise Vakuum (< 30 mBar) angelegt. Der Reaktionsverlauf wurde durch Probenentnahme und Messung der Säurezahl (SZ) und der Hydroxylzahl (OHZ) überwacht. Die Reaktion wurde dann fortgesetzt, bis die SZ unter 2 mgKOH/g erreicht wurde. Falls erforderlich, wurden Glykolkorrekturen durch Zugabe von Diethylenglykol und/oder Säurekorrekturen durch Zugabe von Isophthalsäure durchgeführt. Der Polyester wurde auf 80 °C abgekühlt und dem Harz Ethylacetat (860,0 g) zugesetzt. Das endgültige Gemisch hatte eine SZ von 1,5 mgKOH/g bezogen auf den Feststoffgehalt, OHZ = 18,0 mgKOH / g bezogen auf den Feststoffgehalt, Mn = 6180 g/mol, Mw = 17564 g/mol, mittlere OH-Funktionalität 2,0, Feststoffgehalt = 70,2 %.

### Beispiele 1 - 4 (erfindungsgemäß und Vergleich)

### Herstellung eines 2K-Klebstoffs

Zur Herstellung eines Zweikomponenten-Klebstoffs wurden die Polyolkomponente A) und die jeweilige Isocyanat-Komponentezunächst für 3h bei 60°C erwärmt. Anschließend wurden die Polyolkomponente A) und die Isocyanat-Komponente jeweils in den in Tabelle 1 angegebenen Mengen in ein Becherglas gegeben und nach Zusatz von jeweils 80 g Ethylacetat (p.a. Qualität) für 120 Sekunden mit Hilfe eines Holzspatels von Hand vermischt, wobei eine optisch homogene Klebstoffmischung erhalten wurde.

Die Herstellung von Mehrschichtverbunden unter Verwendung der so erhaltenen Polyurethanklebstoffe, Sterilisation der Verbunde und Prüfung auf Schälfestigkeit erfolgte wie vorstehend beschrieben.

**Tabelle 1**

| **Beispiel** | **1** (Vergleich) | **2** (Vergleich) | **3** (erf.) | **4** (erf.) |
|---|---|---|---|---|
| **Einwaage Isocyanatkomponente [g]** | | | | |
| Polyisocyanat M) | 7,66 | | | |
| Polyisocyanat N) | | 5,2 | | |
| Polyisocyanatgemisch B1) | | | 5,66 | |
| Polyisocyanatgemisch B2) | | | | 6,01 |

| **Einwaage Polyolkomponente [g]** | | | | |
|---|---|---|---|---|
| Polyolkomponente A) | 92,34 | 94,8 | 94,34 | 93,99 |
| Festigkeit nach Lagerung | 4,1 | 4,1 | 3,5 | 4,2 |
| Festigkeit nach Sterilisation / sofort | 1,0 | 2,5 | 3,7 | 5,88 |
| Festigkeit nach Sterilisation / nach 24 h | 2,4 | 4,2 | FR | FR |

| | | | | |
|---|---|---|---|---|
| FR = Folienabriss (>8 N/15 mm), NK = 23 Grad C, 50% relative Luftfeuchte | | | | |

Die erfindungsgemäßen Beispiele 3 und 4 auf Basis der Polyisocyanatgemische B1) und B2) zeigen eine hohe Sterilisationsfestigkeit (Folienabriss nach 24h, >3 N/15 mm nach 1h), die Vergleichsbeispiele 1 und 2 basierend auf den einzelnen Polyisocyanaten M) und N) zeigen dagegen deutlich geringere Sterilisationsfestigkeiten.

## Patentansprüche

1. Zweikomponentensystem für Polyurethanklebstoffe enthaltend eine Komponente A), umfassend mindestens ein Polyol, und eine Komponente B), umfassend ein Polyisocyanatgemisch, enthaltend mindestens ein Polyisocyanat M) der allgemeinen Formel (I) 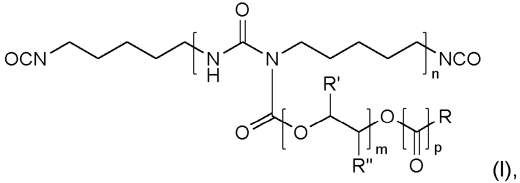 in welcher
R für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
R' und R" unabhängig voneinander für Wasserstoff oder einen aliphatischen Rest mit 1 bis 10 Kohlenstoffatomen stehen, wobei mindestens einer der Reste R' und R" für Wasserstoff steht,
n für eine ganze Zahl von 1 bis 12,
m für eine ganze Zahl von 1 bis 10 und
p für 0 oder 1 steht
und mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen,
wobei die Komponenten A) und B) in einem Gewichtsverhältnis zueinander von 70 : 30 bis 99,9 : 0,1, bevorzugt von 80 : 20 bis 99 : 1 und besonders bevorzugt von 90 : 10 bis 97 : 3 vorliegen.

2. Zweikomponentensystem gemäß Anspruch 1, wobei die Komponenten A) und B) in einem Gewichtsverhältnis zueinander von 80 : 20 bis 99 : 1 und besonders bevorzugt von 90 : 10 bis 97 : 3 vorliegen.

3. Zweikomponentensystem gemäß Anspruch 1 oder 2, wobei die Polyisocyanate M) und N) der Komponente B) in einem Gewichtsverhältnis zueinander von 20 : 80 bis 90 : 10, bevorzugt von 25 : 75 bis 85 : 15 und besonders bevorzugt von 30 : 70 bis 80 : 20 vorliegen.

4. Zweikomponentensystem gemäß einem der Ansprüche 1 bis 3, wobei der kombinierte Anteil der Komponenten A) und B), bezogen auf die Gesamtmenge des Zweikomponentensystems, 80,0 Gew.-% oder mehr, bevorzugt 90,0 Gew.-% oder mehr, mehr bevorzugt 95,0 Gew.-% oder mehr, noch mehr bevorzugt 99,0 Gew.-% oder mehr, am meisten bevorzugt 99,5 Gew.-% oder mehr oder 100,0 Gew.-%, beträgt.

5. Zweikomponentensystem gemäß einem der Ansprüche 1 bis 4, wobei der kombinierte Anteil der Polyisocyanate M) und N), bezogen auf die Gesamtmenge der Komponente B), 80,0 Gew.-% oder mehr, bevorzugt 90,0 Gew.-% oder mehr, mehr bevorzugt 95,0 Gew.-% oder mehr, noch mehr bevorzugt 99,0 Gew.-% oder mehr, am meisten bevorzugt 99,5 Gew.-% oder mehr oder 100,0 Gew.-%, beträgt.

6. Zweikomponentensystem gemäß einem der Ansprüche 1 bis 5, wobei das Polyisocyanat N) aliphatisch, araliphatisch und/oder cycloaliphatisch gebundene Isocyanatgruppen aufweist, bevorzugt auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan ist und besonders bevorzugt mindestens Isocyanuratstrukturen auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan enthält und ganz besonders bevorzugt Isocyanuratstrukturen auf Basis von 1,5-Diisocyanatopentan, 1,6-Diisocyanatohexan und/oder 1-Isocyanato-3,3,5-trimethyl-5-isocyanatomethylcyclohexan enthält.

7. Zweikomponentensystem gemäß einem der Ansprüche 1 bis 5, wobei das Polyisocyanat N) aromatisch gebundene Isocyanatgruppen aufweist, bevorzugt aus monomerem 2,4- und/oder 2,6-Diisocyanatotoluol durch Umsetzung mit Polyolen und/oder Oligomerisierung, vorzugsweise Trimerisierung, erhältliche Polyisocyanate mit Urethan- und/oder Isocyanuratstruktur aufweist oder um Mischungen aus mindestens zwei solcher Polyisocyanate.

8. Zweikomponentensystem gemäß einem der Ansprüche 1 bis 5, wobei das Polyisocyanat N) sowohl aromatische als auch aliphatische Isocyanatgruppen aufweist, bevorzugt gemischte Trimerisate bzw. Allophanate von 2,4- und/oder 2,6-Diisocyanatotoluol mit 1,6-Diisocyanatohexan.

9. Zweikomponentensystem gemäß einem der Ansprüche 1 bis 8, wobei das mindestens eine Polyol Polyesterpolyole, Polyetherpolyole, Polycarbonatpolyole, Polyestercarbonatpolyole, Polyurethanpolyole, Polyacrylatpolyole oder beliebige Gemische solcher Polyhydroxylverbindungen umfasst.

10. Zweikomponentensystem gemäß einem der Ansprüche 1 bis 9, wobei das mindestens eine Polyol Polyesterpolyole eines zahlenmittleren Molekulargewichts (gelchromatografisch bestimmt nach DIN EN ISO 13885-1) von 1000 bis 200000 g/mol, bevorzugt 2000 bis 100000 g/mol und besonders bevorzugt 6000 bis 80000 g/mol umfasst.

11. Zweikomponentensystem gemäß einem der Ansprüche 1 bis 10, wobei das mindestens eine Polyol Polyesterpolyole mit Hydroxylzahlen im Bereich von 0 bis 120 mg KOH/g, besonders bevorzugt 0,1 bis 60 mg KOH/g und am meisten bevorzugt 1 bis 30 mg KOH/g, umfasst.

12. Verfahren zur Herstellung eines Mehrschichtverbunds umfassend oder bestehend aus folgenden Schritten:
I) Bereitstellen von wenigstens zwei Schichten,
II) Auftragen des Zweikomponentensystems für Polyurethanklebstoffe gemäß eine der Ansprüche 1 bis 11 mittelbar oder unmittelbar auf wenigstens eine der beiden bereitgestellten Schichten,
III) Verbinden der Schichten sowie Aushärten des Zweikomponentenklebstoffsystems unter Erhalt des Mehrschichtverbundes.

13. Verwendung der Zweikomponentensysteme gemäß einem der Ansprüche 1 bis 11 zur Herstellung von Mehrschichtverbunden, insbesondere als Laminierklebstoff oder als Kaschierklebstoff und besonders bevorzugt zur Herstellung von Mehrschichtverbunden, die aus einem synthetischen Substrat und einem Substrat mit metallischer Oberfläche bestehen.

14. Mehrschichtverbunde, erhältlich oder hergestellt durch ein Verfahren gemäß Anspruch 12 oder durch Verwendung der Zweikomponentensysteme für Polyurethanklebstoffe gemäß einem der Ansprüche 1 bis 11.

15. Mehrschichtverbund gemäß Anspruch 14, wobei der Mehrschichtverbund ein Verpackungsmaterial oder ein Teil im Automobilinnenraum ist.
